(19) Europäisches Patentamt
European Patent Office
Office européen des brevets

(11) **EP 3 115 964 A1**

(12) **EUROPEAN PATENT APPLICATION**

(43) Date of publication:
**11.01.2017 Bulletin 2017/02**

(51) Int Cl.:
***G06T 5/00*** *(2006.01)*     ***G06T 5/50*** *(2006.01)*

(21) Application number: **15306126.2**

(22) Date of filing: **09.07.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **ROBERT, Philippe
35576 Cesson-Sévigné Cedex (FR)**

• **JOUET, Pierrick
35576 Cesson-Sévigné Cedex (FR)**
• **FRADET, Matthieu
35576 Cesson-Sévigné Cedex (FR)**
• **VARANASI, Kiran
35576 Cesson-Sévigné Cedex (FR)**
• **LE CLERC, François
35576 Cesson-Sévigné Cedex (FR)**

(74) Representative: **Huchet, Anne
TECHNICOLOR
1-5, rue Jeanne d'Arc
92130 Issy-les-Moulineaux (FR)**

(54) **METHOD AND DEVICE FOR REMOVING AN OBJECT IN A VIDEO**

(57)     A salient idea is to explicitly take into account lighting and reflection effects in video frames to better process them in the object removal process. A method for estimating shadows and specular effects in a video and for taking them into account in an object removal process is proposed. It comprises decomposing a plurality of video frames into intrinsic diffuse reflectance, diffuse shading, specular reflectance and specular lighting frames (S12, S14). The method further comprises reconstructing the hidden area (S16) and removing the cast shadows and specular reflections due to the removed object (S18).

Figure 3

**EP 3 115 964 A1**

**Description**

**1. TECHNICAL FIELD**

In the following, a method for removing an object in a video is disclosed. Such method is useful for video editing or augmented reality applications, where an object of a video needs to be removed. Corresponding device is also disclosed.

**2. BACKGROUND ART**

Object removal in a video relates to the reconstruction of hidden parts that become visible when the object is removed as well as the restoration of the appearance of visible areas that are modified by this removal. Some prior art methods are known for reconstructing the hole created by the object removal from pixels visible elsewhere in the image or in the video. These techniques only rely on image content i.e. pixel color to directly fill the gap. However the object to remove may have an impact on the aspect of (often nearby) surfaces, either via a shadow cast by the object on this surface or the reflection of the object on the surface in case of specular surfaces. Prior art methods are also known to remove shadow cast on a surface, for example by involving a user to indicate shadowed and lit areas for a same surface. But the prior art methods do not consider specular effects of the video in the process of object removal and associated reconstructions. They either ignore the specular effects, or attempt to remove the specular effects. Thus some techniques are needed for removing objects in video sequences in presence of specular effects, without creating noticeable artifacts.

**3. SUMMARY**

A salient idea is to explicitly take into account lighting and reflection effects in video frames to better process them in the object removal process. A method for estimating shadows and specular effects in a video and for taking them into account in an object removal process is proposed. It comprises decomposing a plurality of video frames into intrinsic diffuse reflectance, diffuse shading, specular reflectance and specular lighting frames. The method further comprises reconstructing the hidden area, corresponding to the removed object, and restoring the visible surfaces, which appearance depended on the presence of the removed object, by removing the cast shadows and specular reflections due to the removed object.

To that end a method for removing an object in a plurality of frames of a video is disclosed. The method comprises:

- Obtaining a hidden area in the plurality of frames wherein the hidden area corresponds to the object to remove;
- Obtaining a plurality of diffuse frames from the plurality of frames of a video, comprising diffuse reflectance frames and diffuse shading frames;
- Obtaining a plurality of specular frames from the plurality of frames of a video, comprising specular reflectance frames and specular lighting frames;
- Reconstructing the hidden area in the plurality of diffuse reflectance, diffuse shading, specular reflectance and specular lighting frames;
- Removing cast shadows and specular reflections caused by the object to remove in the plurality of frames.

According to a preferred embodiment, obtaining the plurality of diffuse frames from the plurality of frames of a video further comprises:

- determining a diffuse parameter value for a pixel of a frame as the minimum color value of pixels displaying a same registered 3D point of a 3D scene captured by the video;
- replacing the value of each pixel of each frame of the plurality of frames by the determined diffuse parameter value for that pixel, resulting in the plurality of diffuse frames;
- decomposing the plurality of diffuse frames into intrinsic frames resulting in diffuse reflectance and diffuse shading frames.

According to another variant, obtaining the plurality of specular frames from the plurality of frames of a video further comprises:

- subtracting to the value of each pixel of each frame of the plurality of frames, the determined diffuse parameter value for that pixel, resulting in the plurality of specular frames;
- decomposing the plurality of specular frames into intrinsic frames resulting in specular reflectance and specular lighting frames.

According to another variant, decomposing the plurality of specular frames into intrinsic frames further comprises minimizing an energy function comprising a local specular reflectance constraint, a local specular illumination constraint, a non-local specular reflectance constraint and a non-local specular illumination constraint.

According to another variant, reconstructing the hidden area further comprises:

- inter-frame filling of diffuse reflectance, diffuse shading, specular reflectance and specular lighting parameter values between any frames of the plurality, wherein for a 3D point of the 3D scene, the parameter values attached to the pixels of the frames where the 3D point is visible, are used to reconstruct the parameter values of the pixels of the frames where the 3D point is hidden by the object to remove;
- intra-frame interpolation of diffuse reflectance, diffuse shading, specular reflectance and specular lighting parameter values in one frame, wherein for a 3D point of the 3D scene, hidden by the object to remove in all the frames, the parameter values of neighboring pixels of the frame are interpolated to reconstruct the parameter value of a pixel for that 3D point in the frame;
- propagating the interpolated diffuse reflectance, diffuse shading, specular reflectance and specular lighting parameter values of the frame to other frames by the inter-frame filling.

According to another variant, the intra-frame interpolation of diffuse and specular reflectance parameter values in the frame comprises inpainting.

According to another variant, reconstructing the hidden area further comprises reconstructing the geometry of the hidden surface corresponding to the hidden area and applying the intra-frame interpolation of the diffuse shading and the specular lighting parameter values between neighboring pixels with similar visibility vectors, wherein the visibility vector of a pixel displaying a registered 3D point comprises a set of components, indicating the visibility of the registered 3D point in a set of directions, sampled around the normal at the registered 3D point.

According to another variant, inter-frame filling of the specular lighting parameter values is applied between at least two adjacent frames.

According to another variant, removing cast shadows caused by the object to remove further comprises, for each pixel located in a neighboring area of the removed object, having a non-null diffuse shading parameter value:

- determining whether it is caused by the removed object from the visibility vector of the pixel; and
- in case a non-null diffuse shading parameter value is caused by the removed object, updating the visibility vector and the diffuse shading parameter value from the diffuse shading parameter values of the neighboring pixels, by taking into account the similarity between the updated visibility vector and the visibility vectors of the neighboring pixels.

According to another variant, removing specular reflections caused by the object to remove further comprises, for each pixel located in a neighboring area of the removed object, having a non-null specular lighting parameter value :

- determining whether it is caused by the removed object from the visibility vector of the pixel; and
- in case a non-null specular lighting parameter value is caused by the removed object, updating the specular lighting parameter value from the specular lighting parameter values of the neighboring pixels by taking into account similarities in visibility vectors, surface normal vectors and reflectance parameter values of the neighboring pixels.

In a second aspect, a device for removing an object in a video is also disclosed. The device comprises a processor configured to:

- Obtain a hidden area in the plurality of frames wherein the hidden area corresponds to the object to remove;
- Obtain a plurality of diffuse frames from the plurality of frames of a video, comprising diffuse reflectance frames and diffuse shading frames;
- Obtain a plurality of specular frames from the plurality of frames of a video, comprising specular reflectance frames and specular lighting frames;
- Reconstruct the hidden area in the plurality of diffuse reflectance, diffuse shading, specular reflectance and specular lighting frames;
- Remove cast shadows and specular reflections caused by the object to remove in the plurality of frames.

According to a preferred embodiment, the processor is further configured to:

- determine a diffuse parameter value for a pixel of a frame as the minimum color value of pixels displaying a same registered 3D point of a 3D scene captured by the video;

- replace the value of each pixel of each frame of the plurality of frames by the determined diffuse parameter value for that pixel, resulting in the plurality of diffuse frames;
- decompose the plurality of diffuse frames into intrinsic frames resulting in diffuse reflectance and diffuse shading frames.

According to another variant the processor is further configured to:

- subtract to the value of each pixel of each frame of the plurality of frames, the determined diffuse parameter value for that pixel, resulting in the plurality of specular frames;
- decompose the plurality of specular frames into intrinsic frames resulting in specular reflectance and specular lighting frames.

According to another variant, the processor is further configured to decompose the plurality of specular frames into intrinsic frames further by minimizing an energy function comprising a local specular reflectance constraint, a local specular illumination constraint, a non-local specular reflectance constraint and a non-local specular illumination constraint.
According to another variant, the processor is further configured to:

- inter-frame fill the diffuse reflectance, diffuse shading, specular reflectance and specular lighting parameter values between any frames of the plurality, wherein for a 3D point of the 3D scene, the parameter values attached to the pixels of the frames where the 3D point is visible, are used to reconstruct the parameter values of the pixels of the frames where the 3D point is hidden by the object to remove;
- intra-frame interpolate the diffuse reflectance, diffuse shading, specular reflectance and specular lighting parameter values in one frame, wherein for a 3D point of the 3D scene, hidden by the object to remove in all the frames, the parameter values of neighboring pixels of the frame are interpolated to reconstruct the parameter value of a pixel for that 3D point in the frame;
- propagate the interpolated diffuse reflectance, diffuse shading, specular reflectance and specular lighting parameter values of the frame to other frames by the inter-frame filling.

According to another variant, the processor is further configured to intra-frame interpolate the diffuse and specular reflectance parameter values in the frame by inpainting.
According to another variant, the processor is further configured to reconstruct the geometry of the hidden surface corresponding to the hidden area and to apply the intra-frame interpolation of the diffuse shading and the specular lighting parameter values between neighboring pixels with similar visibility vectors, wherein the visibility vector of a pixel displaying a registered 3D point comprises a set of components, indicating the visibility of the registered 3D point in a set of directions, sampled around the normal at the registered 3D point.
According to another variant, the processor is further configured to apply inter-frame filling of the specular lighting parameter values between at least two adjacent frames.
According to another variant, for each pixel located in a neighboring area of the removed object, having a non-null diffuse shading parameter value the processor is further configured to remove cast shadows caused by the object to remove by:

- determining whether it is caused by the removed object from the visibility vector of the pixel; and
- in case a non-null diffuse shading parameter value is caused by the removed object, updating the visibility vector and the diffuse shading parameter value from the diffuse shading parameter values of the neighboring pixels, by taking into account the similarity between the updated visibility vector and the visibility vectors of the neighboring pixels.

According to another variant, for each pixel located in a neighboring area of the removed object, having a non-null specular lighting parameter value, the processor is further configured to remove specular reflections caused by the object to remove by :

- determining whether it is caused by the removed object from the visibility vector of the pixel; and
- in case a non-null specular lighting parameter value is caused by the removed object, updating the specular lighting parameter value from the specular lighting parameter values of the neighboring pixels by taking into account similarities in visibility vectors, surface normal vectors and reflectance parameter values of the neighboring pixels.

In a third aspect, a computer program for removing an object in a video is also disclosed. The computer program comprises program code instructions executable by a processor for:

- Obtaining a hidden area in the plurality of frames wherein the hidden area corresponds to the object to remove;
- Obtaining a plurality of diffuse frames from the plurality of frames of a video, comprising diffuse reflectance frames and diffuse shading frames;
- Obtaining a plurality of specular frames from the plurality of frames of a video, comprising specular reflectance frames and specular lighting frames;
- Reconstructing the hidden area in the plurality of diffuse reflectance, diffuse shading, specular reflectance and specular lighting frames;
- Removing cast shadows and specular reflections caused by the object to remove in the plurality of frames.

In a fourth aspect, a computer program product for removing an object in a video is also disclosed. The computer program product is stored on a non-transitory computer readable medium, and comprises program code instructions executable by a processor for:

- Obtaining a hidden area in the plurality of frames wherein the hidden area corresponds to the object to remove;
- Obtaining a plurality of diffuse frames from the plurality of frames of a video, comprising diffuse reflectance frames and diffuse shading frames;
- Obtaining a plurality of specular frames from the plurality of frames of a video, comprising specular reflectance frames and specular lighting frames;
- Reconstructing the hidden area in the plurality of diffuse reflectance, diffuse shading, specular reflectance and specular lighting frames;
- Removing cast shadows and specular reflections caused by the object to remove in the plurality of frames.

While not explicitly described, the present embodiments may be employed in any combination or sub-combination. For example, the present principles are not limited to the described variants, and any arrangement of variant can be used. Moreover the present principles are not limited to the described intra-frame and inter-frame interpolation characteristics and any other interpolation characteristic is applicable.

Besides, any characteristic, variant or embodiment described for the method is compatible with a device intended to process the disclosed method and with a computer-readable storage medium storing program instructions.

## 4. BRIEF DESCRIPTION OF THE DRAWINGS

In the drawings, an embodiment of the present invention is illustrated. It shows:

- **Figure 1** depicts a processing device for removing an object in a video according to a specific and non-limiting embodiment of the invention;
- **Figure 2** represents an exemplary architecture of the processing device of figure 1 according to a specific and non-limiting embodiment of the invention;
- **Figure 3** illustrates the method for removing an object in a video according to a preferred embodiment;
- **Figure 4** illustrates an exemplary 3D scene and an object removal scenario according to a preferred embodiment;
- **Figure 5** illustrates an example of reflection on a surface point from a light source towards a view point according to a preferred embodiment;
- **Figure 6** illustrates another example of reflection on a surface point from a light source towards a view point according to a preferred embodiment;
- **Figure 7** illustrates an example of the impact of an object to remove on reflection effects according to a preferred embodiment;

## 5. DESCRIPTION OF EMBODIMENTS

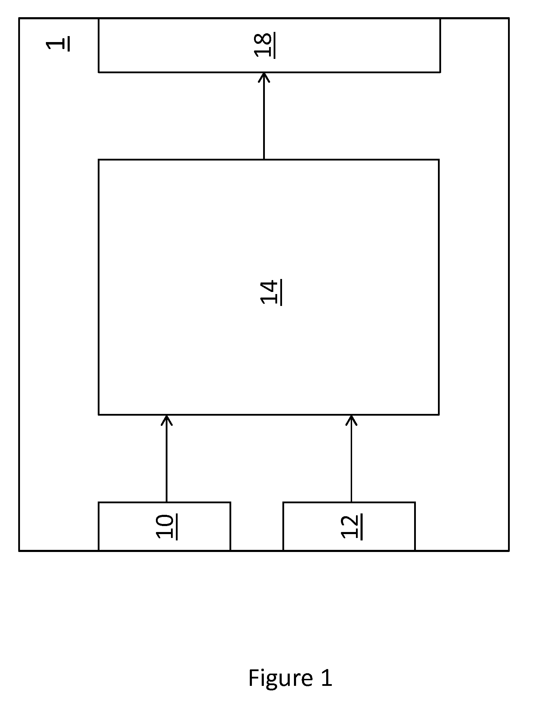

**Figure 1** depicts a processing device 1 for removing an object in a plurality of frames of a video comprising obtaining a hidden area, corresponding to the object to remove.

According to a specific and non-limiting embodiment of the invention, the processing device 1 comprises an input 10 configured to receive the plurality of frames of a video comprising the object to remove. The frames are obtained from a source. According to different embodiments of the principle, the source belongs to a set comprising:

- a local memory, e.g. a video memory, a RAM, a flash memory, a hard disk ;
- a storage interface, e.g. an interface with a mass storage, a ROM, an optical disc or a magnetic support;

- a communication interface, e.g. a wireline interface (for example a bus interface, a wide area network interface, a local area network interface) or a wireless interface (such as a IEEE 802.11 interface or a Bluetooth interface);

The processing device 1 also comprises an input 12 to receive selection data from a user. Selection data are generated by a user via a selection mean in order to obtain an area corresponding to the object to remove and further called hidden area. According to different embodiments of the invention, the selection mean belongs to a set comprising:

- a touch screen sensor and its accompanying controller based firmware able to obtain a hidden area in at least one frame of the video, in conjunction with an external object such as a stylus or a finger;
- a mouse combined to other input signals (such as some keys of a keyboard), and associated to some video display capability so as to obtain a hidden area in at least one frame of the video.

More generally any selection mean allowing to obtain an area corresponding to an object to remove, is compatible with this principle.

The inputs 10 and 12 are linked to a processing module 14 configured to obtain an area in the plurality of frames, where the area corresponds to an object to remove, and is called hidden area. The processing module 14 is further configured to obtain a plurality of diffuse frames from the plurality of frames, comprising diffuse reflectance and diffuse shading frames. The processing module 14 is further configured to obtain a plurality of specular frames from the plurality of frames, comprising specular reflectance and specular lighting frames. The processing module 14 is further configured to reconstruct the hidden area in the plurality of diffuse reflectance, diffuse shading, specular reflectance and the specular lighting frames. The processing module 14 is further configured to remove cast shadows and specular reflections caused by the object to remove in the plurality of frames.

The resulting plurality of frames is sent to an output 18 such as a display mean. According to a particular embodiment the display mean is external to the device and the output 18 sends the data to display to an external display mean. According to different embodiments of the principle, the display mean, internal or external, belongs to a set comprising:

- a personal computer screen;
- a TV screen;
- a tablet;
- a smartphone screen.

More generally any display mean allowing to display a plurality of frames where an object has been removed, is compatible with this principle.

In a variant, the resulting plurality of frames is stored in a remote or local memory, e.g. a video memory or a RAM, a hard disk.

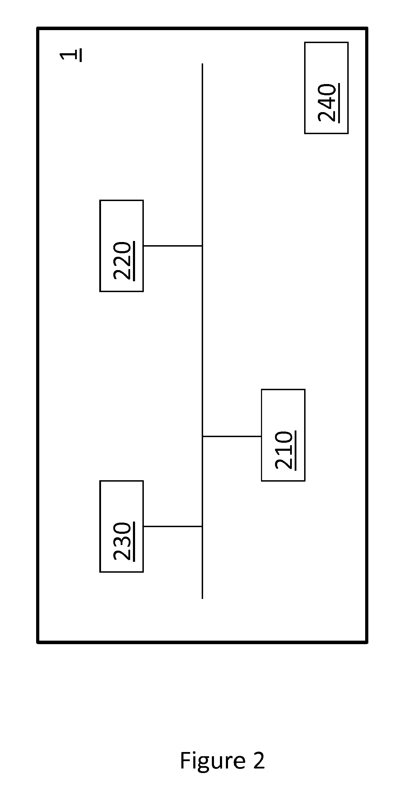

**Figure 2** represents an exemplary architecture of the processing device 1 according to a specific and non-limiting embodiment of the invention, where the processing device 1 is configured to remove an object in a plurality of frames of a video. The memory stores the plurality of frames of the video comprising the object to remove. The processing device 1 comprises one or more processor(s) 210, which is(are), for example, a CPU, a GPU and/or a DSP (English acronym of Digital Signal Processor), along with internal memory 220 (e.g. RAM, ROM, EPROM). The processing device 1 comprises one or several Input/Output interface(s) 230 adapted to send to display output information and/or to allow a user to enter commands and/or data (e.g. a keyboard, a mouse, a touchpad, a webcam, a display), and/or to send / receive data over a network interface; and a power source 240 which may be external to the processing device 1.

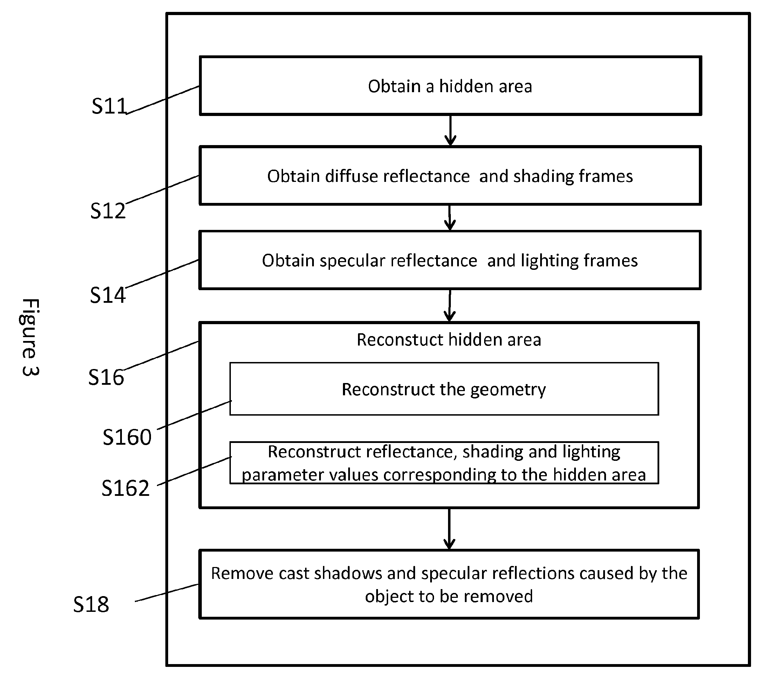

According to an exemplary and non-limiting embodiment of the invention, the processing device 1 further comprises a computer program stored in the memory 220. The computer program comprises instructions which, when executed by the processing device 1, in particular by the processor 210, make the processing device 1 carry out the processing method described with reference to figure 3. According to a variant, the computer program is stored externally to the processing device 1 on a non-transitory digital data support, e.g. on an external storage medium such as a SD Card, HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limiting embodiments, the processing device 1 is a device, which belongs to a set comprising:

- a mobile device ;
- a communication device ;

- a game device ;
- a tablet (or tablet computer) ;
- a smartphone;
- a laptop ;
- a still picture camera;
- a video camera ;
- a still picture server ;
- a video server (e.g. a broadcast server, a video-on-demand server or a web server).

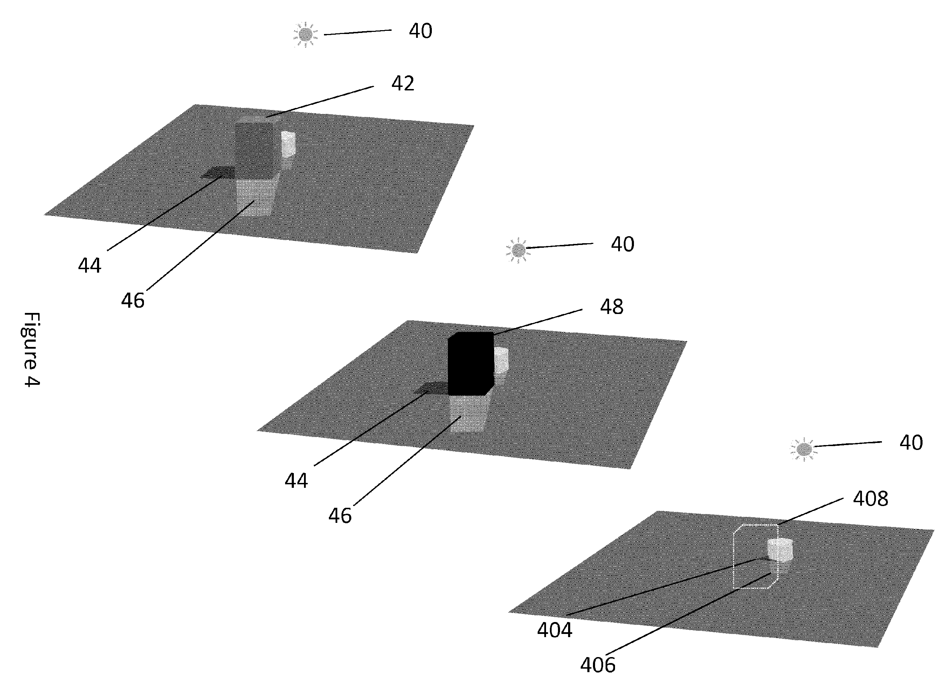

**Figure 3** illustrates a method for removing an object in a plurality of frames of a video according to a preferred embodiment. The video is considered as an input frame sequence captured by a camera, for which the camera pose is known at each frame and from which the 3D geometry of a captured scene can be retrieved. A camera comprising a color+depth sensor is for instance well suited to get this information but other methods are also compatible with the disclosed method. A captured color+depth frame sequence is analyzed to estimate the pose of each view point in an absolute coordinate system. This is carried out via known techniques such as for example Iterative Closest Point (ICP) techniques. Once the sensor poses are available, the plurality of frames are registered with respect to a reference frame and 3D points of the captured scene are associated to the pixels of the frames, displaying them. Consequently, displayed 3D points of the captured scene can be tracked along the plurality of frames. In other words, a given 3D point observed in the plurality of registered frames, as a set of pixels along frames describes the evolution of the color of these pixels displaying the corresponding 3D point of the scene over time. In the step S11, a hidden area 48, as shown in figure 4, is obtained in at least one frame of the video sequence according to selection data received from a selection mean. A user visualizing at least one frame of the video sequence selects an object 42 to remove in the at least one frame. Advantageously, the object 42 to remove is indicated by a user in one frame and further segmented and tracked along the frames of the video. The object 42 to remove in a frame corresponds to a hidden area 48 in the frame that needs to be restored as further described in the disclosed method.

### 1. Obtaining a plurality of diffuse frames

As the camera pose is known at each frame of the video and as the camera comprises a sensor allowing to retrieve the 3D geometry of the scene, each frame is registered with respect to a given coordinate system attached to the scene. In other words, each pixel of each frame is attached to a corresponding 3D point in the scene and to its coordinates in the coordinate system attached to the scene. From the 3D geometry, surface normal vectors are computed and any occlusion of a surface by an object from a given 3D viewpoint is estimated. Given a particular 3D point of a surface in the scene, the corresponding image point in the frames of the video sequence is located and classified as visible, occluded or out of field. It is known from the prior art that a frame / can be decomposed into the product of a shading frame S and a reflectance frame $R$ :

$$I^p = R^p.S^p \quad (1)$$

where p denotes a pixel in the frame. These two frames are called intrinsic frames. Lee et al, in "Estimation of intrinsic image sequences from image+depth video", published in the Proceedings of the European Conference on Computer Vision in 2012, propose a solution to separate a frame into these two intrinsic and view independent frames, reflectance and shading. This method, hereafter referred as Lee et al method only address the diffuse part of the reflectance, and neglects the presence of specular effects in the video. More precisely, Lee et al method proposes to process specular effects as outliers and to discard this data.

It is also generally admitted that two types of reflectance compose the reflectance of a surface : diffuse and specular, although existing intrinsic frame decomposition methods, such as for instance Lee et al method, only address the diffuse part of the reflectance. In order to also consider the specular part of a surface reflectance, a frame is modeled as follow:

$$I^P = I_d^p + I_S^P \quad (2)$$

Where p denotes a pixel in the frame space, d represents the diffuse part, and s represents the specular part of color value of the pixel $p$.

In the step S12, a plurality of diffuse frames is obtained from the plurality of frames of the video, wherein the diffuse frames comprise diffuse reflectance ($R_d$) and diffuse shading ($S_d$) frames.

More formally : equation (2) can be re-written as :

$$I^P = R_d^p . S_d^p + R_S^P . S_s^p \quad (3)$$

when applied to a pixel p

And more generally considering $I$, $R_d$, $R_s$, $S_d$ and $S_s$ as matrices :

$$I = R_d . S_d + R_S . S_s \quad (4),$$

where for a frame $I$, $R_d$, $S_d$, $R_s$, and $S_s$ respectively represent its diffuse reflectance ($R_d$), diffuse shading ($S_d$), specular reflectance ($R_s$), and specular lighting ($S_s$) frames.

Also from equations (2) and (4) $I_d = R_d . S_d$ being the pel by pel product between a diffuse reflectance frame and a diffuse shading frame is a diffuse frame.

Similarly

$I_s = R_s . S_s$ being the pel by pel product between a specular reflectance frame and a specular lighting frame is a specular frame.

Each of the $I_d$, $I_s$, $R_d$, $S_d$, $R_s$, and $S_s$ frames comprises a set of parameter values corresponding to the color values of pixels of the frames, where the parameter value for a pixel p is respectively noted $I_d^p, I_s^p, R_d^p, S_d^p, R_S^P, S_s^p$

In addition to the decomposition of diffuse frames in view-independent intrinsic frames of reflectance and shading, known in the prior art, the disclosed principle proposes to decompose specular frames into two types of intrinsic frames:

- specular reflectance frames $R_s$ that are dependent from an intrinsic property of the surface (like diffuse reflectance $R_d^p$), and comprise view-independent parameter values;
- specular lighting frames $S_s$ comprise the lighting contribution that creates the specular effect. Specular lighting frame parameter values are view dependent as they depend on the orientation of the light source with respect to the surface and the image sensor position (as explained further below). If one considers a given 3D area observed in the plurality of registered frames, the specular lighting parameter values of corresponding pixels displaying this given 3D area, describe the evolution of the lighting that creates the specular effect. Specular lighting parameter values make a pixel color value evolve over time (the three other types of parameters values $R_d^p, S_d^p, R_S^P$ are constant over time). The evolution depends on the characteristics of the light source and also on the surface shininess property. Specular lighting parameter values are also generally spatially smooth, in particular in planar or continuous surfaces.

An important feature is the identification of the diffuse contribution $I_d^p$ for each pixel. In Lee et al method mentioned above, a specular effect is considered as an outlier and temporal filtering is used to discard this effect.

The cast shadow effect is estimated through the algorithm that separates shading and reflectance in the diffuse parameter value $I_d^p$. In Lee et al.'s method the estimation of cast shadows is made easier by the computation for each surface 3D point of a visibility vector to account for differences in lighting conditions due to occlusions : the visibility vector of a surface 3D point is a forty eight binary vector which each component indicates visibility or not of that surface 3D point from a given direction (from forty eight directions obtained by a regular sampling of polar and azimuth angles from $-\pi/4$ to $\pi/4$ at intervals of $\pi/12$). In spite of this additional interesting constraint, the separation problem often remains difficult.

Considering each 3D point of the 3D scene surface is observed without any specular part in at least one frame, the corresponding color value results from diffuse reflection (free from specular effect). Therefore, for each 3D point of the 3D scene surface, its corresponding *diffuse parameter value* is estimated by a precise selection of the frame. More precisely, considering the video results from a capture of a static scene, by a moving sensor / camera, the cast shadows do not vary across the frames of the video. The diffuse parameter value $I_d^p$ for a pixel p of a frame *I* is determined as the minimum color or brightness value of pixels displaying a same registered 3D point of the 3D scene captured by the video. In other words once the plurality of frames has been registered with respect to a reference frame, the evolution of the color or brightness of a pixel of the reference frame over time is obtained, resulting in an intensity profile. For example, the color of a pixel is represented by a vector of three values for the basic red, green and blue colors, and an intensity single value for a pixel is obtained from the color vector of the same pixel. Any method for computing an intensity value from a color vector is compatible with the disclosed principle. Advantageously, a brightness value is obtained from a color vector as an intensity value according to the TV standards. An intensity profile comprises a set of intensity values for a pixel displaying a same registered 3D point over time in frames of the plurality of frames. For each pixel, the minimum value of its intensity profile is selected and the corresponding color vector is used to determine the diffuse parameter value $I_d^p$ for that pixel. This operation tends to replace color values with a possible specular part by color values without specular part. By this way, the diffuse parameter value $I_d^p$ can be estimated and satisfactorily separated from the specular parameter value $I_s^p$. In other words, a plurality of *diffuse* frames is further obtained by replacing the parameter value of each pixel of each frame of the plurality of frames, by the determined *diffuse* parameter value for that pixel at the reference frame. As generally the pixel in the current frame is not a pixel in the reference frame, its value in the reference frame is estimated via spatial bilinear interpolation. If a pixel of a frame is not observed in the reference frame, this frame becomes a reference frame and the same processing as before is carried out. Advantageously this processing is iterated with different successive reference frames. Then, d*iffuse reflectance $R_d$* and *diffuse shading $S_d$* frames are obtained for the plurality of frames by decomposing into intrinsic frames the plurality of *diffuse* frames using known method, such as for example the Lee et al method mentioned before.

### 2. Obtaining a plurality of specular frames

In the step S14 a plurality of specular frames is obtained from the plurality of frames by subtracting to the parameter value of each pixel of each frame of the plurality of frames, the determined diffuse parameter value for that pixel, as shown by the equation

$$I_s^p = I^p - I_d^p \quad (5).$$

Obtaining the plurality of specular frames further comprises decomposing the plurality of specular frames into intrinsic frames resulting in specular reflectance and specular lighting frames. Obtaining specular reflectance and specular lighting frames further comprises minimizing an energy function comprising a local specular reflectance constraint, a local specular illumination constraint, a non-local specular reflectance constraint and a non-local specular illumination constraint.

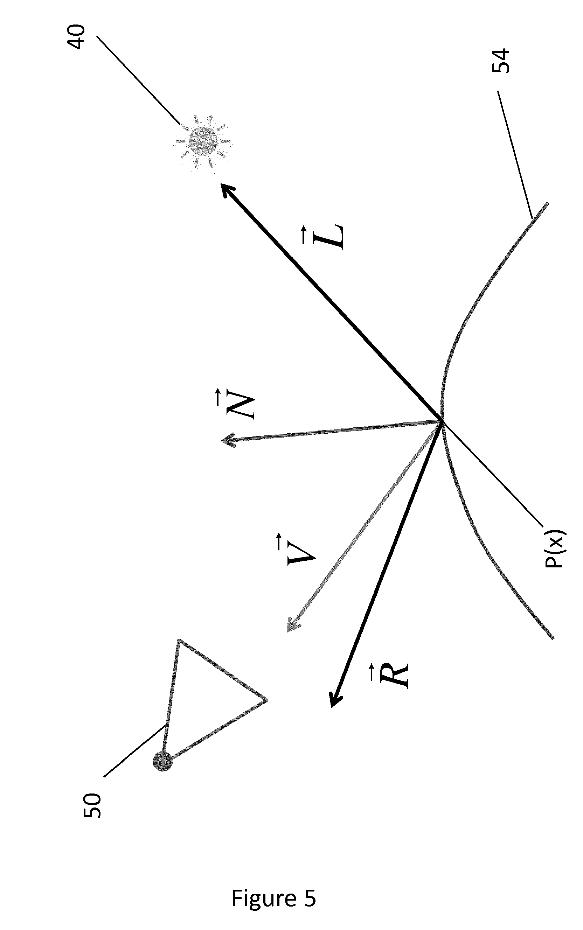

Let us consider *specular effects* and in particular the empirical reflection model of the local illumination of points proposed by Phong in "Illumination for computer generated pictures", published in Communications of ACM Volume 18 in 1975. As illustrated in Figure 5 where a surface 54 reflects a light source 40, the equation (6) describes the specular reflection of a single light source on a shiny surface :

$$I_s^p = k_s \left( \vec{R}.\vec{V} \right)^\alpha i_s \quad (6)$$

Parameters ks and $\alpha$ are respectively the specular reflectance and the "shininess" coefficient (the larger the more mirror-like it is). $i_s$ is light source color vector.

Considering a particular 3D point P(x) of the surface 54, the normalized $\overline{N}, \overline{L}, \overline{R}, \overline{V}$ vectors respectively refer to the surface normal, the direction of a light source 40, the direction that a perfectly reflected ray of light would take from this 3D point P(x) on the surface 54 and the direction pointing towards the sensor 50.

$\overline{R}, \overline{L}$ and $\overline{N}$ are linked by the relation (7):

$$\vec{R} = 2 \left( \overline{L}.\vec{N} \right) \vec{N} - \vec{L} \quad (7)$$

Considering that the color value is determined in the step S12 free from specular effect, as described above the equation (6) is rewritten as :

$$I^p = I^p_d + k_s \left( \vec{R}.\vec{V} \right)^\alpha i_s$$

Where $I^p_d = R^p_d.S^p_d$ has been obtained as described in the step S12.

Notice that if we observe a surface 3D point from different directions, it may undergo different specular effects from different light sources. In case a given 3D point P(x) is observed from different view angles along the sequence, the specular contribution is estimated for each observation angle.

From equation (6), we propose now to identify the specular reflection coefficient as well as illumination source that lead to a specular effect on a given surface 3D point.

Let us consider this equation in the logarithmic domain for a given pixel $p$ :

$$i_p = r_p + s_p$$

where variables r and s refer respectively to $k_s$ and $\left( \vec{R}_m.\vec{V} \right)^\alpha .i_{m,s}$ . Index $m$ corresponds to a particular specular light source.

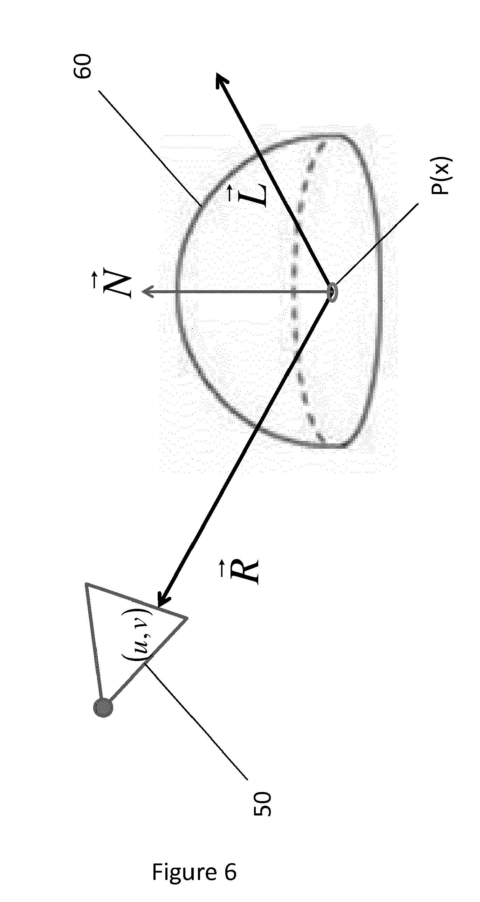

With this equation, shading $S_p$ corresponds to lighting located in direction $\overline{L}$ from the surface 3D point P(x) as illustrated in figure 6. The surface 3D point P(x) is seen at image point $p$ (with 2D coordinates (u,v)), at frame t, in direction $\overline{R}$ from the illumination of the 3D point P(x) of the surface.

It is possible to consider local and non-local constraints both for specular reflectance and illumination. These components are reviewed below with some differences in the non-local constraints.

Variables $s$ and $r$ are considered to be spatially smooth except between pixels where there exists a large difference in intensity, chromaticity, depth or surface normal. Energy function that considers *local specular reflectance constraint* (smoothness in *r*) is defined by :

$$\sum_{(p,q)\in N} \left[ \omega^r_{p,q} \left( \left( i_p - s_p \right) - \left( i_q - s_q \right) \right)^2 \right]$$

where :

$$\omega^r_{p,q} = \begin{cases} \omega_r & if\ (1 - \tilde{c}^T_p \tilde{c}_q) < \tau_r \\ 0 & otherwise \end{cases}$$

$N$ is the set of all adjacent pixel pairs in the image. $\tilde{c}_p$ denotes the 3x1 normalized color vector of pixel $p$. Pixels $q$ are all pixels adjacent to pixel $p$. Weight $\omega^r_{p,c_i}$ takes into account color similarity between neighboring pixels $p$ and $q$. This smoothness energy is considered only if the pixel color values are close enough.

Energy function that considers *local specular illumination constraint* (smoothness in s) is defined by :

$$\sum_{(p,q)\in N} \left[ \omega^s_{p,q} \left( s_p - s_q \right)^2 \right] \qquad (8)$$

It gives a larger weight between adjacent pixels that have similar normal orientations :

$$\omega_{p,q}^s = \begin{cases} & if\, (1 - \tilde{n}_p^T \tilde{n}_q) < \tau_r \\ \omega_s & otherwise \\ \beta.\omega_s & \end{cases} \quad \text{with } \beta<<1$$

If a 3D point *P* corresponding to pixel p has a light source in direction $\overline{L}(P)$ (relation (7)), then 3D point *Q* corresponding to pixel *q* has this light source approximately in direction $\overline{L}(Q)$ if both 3D points have a similar normal vector.

The local neighborhood is defined by a 2D window centered on the current pixel. Moreover, depth is also considered to discard pixels corresponding to distant 3D points : pixels located inside the window centered on the current pixel and which depth is close to the depth value of the current pixel (comparison of the absolute difference of depth to a threshold) are classified as belonging to its neighborhood.

Energy function corresponding to *non-local specular reflectance constraint* is given by :

$$\sum_{p \in \Omega} \sum_{q \in G_{rr}(p)} \left[ \omega_{nlr} \left( (i_p - s_p) - (i_q - s_q) \right)^2 \right]$$

Where $\Omega$ denotes the set of image pixels and $\omega_{nlr}$ is a constant weight

As explained before, in our model, diffuse and specular contributions to a pixel color value are distinguished by first isolating diffuse contribution from specular one and then estimating each element of these two contributions. If a diffuse reflectance parameter value $R_d^t$ is available assuming it has been estimated in a prior phase or at least diffuse parameter value $I_d^p$ that is really available, then it can be used in this new specular constraint.

If two pixels have matching local neighborhoods with respect to chromaticity values or with respect to their diffuse reflectance parameter value $R_d^p$, their intrinsic specular reflectance values are considered to be the same :

$$r_p = r_q \quad if \quad q \in G_{rr}(p)$$

$G_{rr}(p)$ denotes the *reflectance group of p* as determined by clustering of local chromaticity textures or diffuse reflectance.

Energy function corresponding to *non-local specular illumination constraint* is defined by :

$$\sum_{p \in \Omega} \sum_{q \in G_{ss}(p)} \left[ \omega_{nls} \left( s_p - s_q \right)^2 \right] \qquad (9)$$

where $\omega_{nls}$ is a constant weight

This constraint has been proposed in Lee et al method, for shading estimation. We propose to apply it for specular illumination estimation, by operating this constraint on grouped neighborhoods of pixels :

$$s_p = s_q \quad if \quad q \in G_{ss}(p)$$

This is an extension of the constraint proposed in Lee et al method, for shading estimation in diffuse case. Their constraint operates on grouped neighborhoods of surface normal vectors :

$$s_p = s_q \quad if \quad q \in G_s(p) \quad and \quad \left\| V(p) - V(q) \right\| < \tau_v$$

$G_s(p)$ denotes the *shading group of p* computed by clustering of local surface normal neighborhoods. A *visibility condition* is also added to the surface normal vectors condition to identify the group : $\|V(p)-V(q)\| < \tau_v$

It concerns the visibility of each pixel w.r.t. possible lighting directions. It is estimated via shadow mapping considering polar and azimuth angles ($\theta,\varphi$) from - $\pi/4$ to $\pi/4$ at intervals of $\pi/12$. The visibility results are organized into a forty eight binary feature vector for each pixel. Then, to compute distance between the binary vectors, the Hamming distance is used :

$$\|V(p) - V(q)\| = \sum_{i=1}^{48} |V_i(p) - V_i(q)|$$

In the definition of $G_{ss}(p)$ that concerns the lighting parameter values of the specular part, we limit the group by considering the normal vector similarity as described in Lee et al method. In addition to that we further limit the group by also considering similarities in the directions pointing towards the image points p and q. Actually, we introduce the additional constraint that the directions $\overline{R}(p)$ and $\overline{R}(q)$ must be close :

$$(\vec{R}(p).\vec{R}(q)) > \tau_R$$

We also consider the visibility as described in Lee et al method to take into account possible light occlusions by an object. In addition to that, we only consider this visibility in directions close to the light source $\overline{L}$ as shown on figure 6. The direction $\overline{L}$ is computed from R and $\overline{N}$ following equation (7).

For example, we consider the visibility element $V()$ that corresponds to the direction $\overline{K}$, defined by $(\theta,\varphi)$, that is closest to $\overline{L}$. Another possible solution is to consider all directions $(\theta,\varphi)$ that are close to $\overline{L}$ and to compute an average visibility from these selected directions :

$$\|V(p) - V(q)\| = \frac{1}{n} \sum_{i=1}^{n} |V_i(p) - V_i(q)|$$

if n directions have been selected among the *i* sampled directions such that:

$$(\vec{L}(p).\vec{K}_i(p)) > \tau_L$$

*Optimization*

The final energy function grouping all the previous elementary ones is given by :

$$\arg.\min_s \sum_{(p,q)\in N} \left[ \omega_{p,q}^s (s_p - s_q)^2 + \omega_{p,q}^r ((i_p - s_p) - (i_q - s_q))^2 \right]$$
$$+ \sum_{p\in\Omega} \sum_{q\in G_{rr}(p)} \left[ \omega_{nlr} ((i_p - s_p) - (i_q - s_q))^2 \right] + \sum_{p\in\Omega} \sum_{q\in G_{ss}(p)} \left[ \omega_{nls} (s_p - s_q)^2 \right]$$

Advantageously pre-processing the frame sequence to reduce noise is introduced. Then, the intrinsic frames are estimated via the minimization of this energy function with classical methods. From this minimization, specular lighting map is first estimated and then specular reflectance map is derived.

Minimizing the final energy function allows to determine the specular reflectance and specular lighting parameter values of the specular frames of the current input frame.

Unlike the diffuse case, the specular lighting parameter value of a 3D point generally varies along the sequence according to the changes in camera viewpoint. On the other hand, the specular reflectance parameter remains constant.

To process the sequence of frames, a first solution is to estimate the specular frames along the sequence independently from each other using the method above described.

Another solution is to take into account the correlation in specular frames between close viewpoints. In this context, the sets *N*, $G_{rr}$ and $G_{ss}$ can be modified to take into account the neighboring frames. The set *N* of all adjacent pixel pairs in the image can be extended to pairs of pixels with the same 2D coordinates and located in 2 successive frames. The pairs can be defined between the current frame and the previous frame and between the current frame and the next frame. It is assumed that successive frames have close viewpoints. Nevertheless, it is also possible when the set of views have been captured separately or if the trajectory is complex with forward and backward motion to test the proximity of the viewpoints before considering this inter-frame constraint. In the case the viewpoints are not close, it is possible to register the frames by compensating the 3D transformation as it has been done to estimate the diffuse frame.

Let us call *Nt* the set of adjacent pixel pairs between two close frames. Energy function that considers *local inter-frame specular reflectance constraint* (smoothness in *r*) is defined by :

$$\sum_{(p,q)\in Nt}\left[\omega_{p,q}^{r}\left(\left(i_{p}-s_{p}\right)-\left(i_{q}-s_{q}\right)\right)^{2}\right]$$

Similarly, if $G_{rrt}(p)$ denotes the *reflectance group of p* as determined by clustering of local chromaticity textures or diffuse reflectance in the selected neighboring frames, energy function corresponding to *non-local specular reflectance constraint* is given by :

$$\sum_{p\in\Omega}\ \sum_{q\in G_{rrt}(p)}\left[\omega_{nlr}\left(\left(i_{p}-s_{p}\right)-\left(i_{q}-s_{q}\right)\right)^{2}\right]$$

These two constraints are strong as the reflectance parameter of a given 3D point is constant whatever the viewpoint.

In the case of the specular lighting frame, similar constraints can also be introduced with weaker weights as specular lighting depends on the viewpoint. The equations defined for the intra-frame case can be re-used, with *Nt* (already defined) instead of N in equation (8), and $G_{sst}$ instead of $G_{ss}$ in equation (9) that defines the group of pixels in the close frames.

Advantageously, these four constraints are added to the energy function described previously in the intra-frame case. Then a classical method can be used to minimize this energy function.

### 3. Reconstructing the hidden area

#### 3.1 Geometry reconstruction of the hidden surface

In the step S16, the hidden area of the plurality of frames is restored. It comprises a sub step S160 of reconstructing the geometry of the surface hidden by the object to remove. The reconstruction of the hidden surface geometry comprises a first process of reducing the hole in each frame to the pixels which surface 3D point is visible in no frame, and a second process of filling the geometry of the remaining hole.

##### 3.1.1. Reducing the hole in each frame to the pixels which surface 3D point is visible in no frame:

In a first variant, the plurality of frames is processed in order to sequentially fill the hole as far as possible. The previously filled depth map is projected onto the current map in order to fill the hole if possible. The sequence is forward and backward processed. It is also possible to project a set of selected maps on each depth map in order not to be limited to the projection of the neighboring maps. In this way, the hole is reduced in each frame to the pixels which 3D point is observed in no view.

In a second variant, a volumetric model of the visible scene is built from sensor data, for example from a color + depth video sequence, for example using the technique disclosed by Newcombe et al in "KinectFusion: Real-Time Dense Surface Mapping and Tracking" published in the Proceedings of the 10th International Symposium on Mixed and Augmented Reality in 2011. The geometric representation of the scene is composed of voxels classified as : either occupied (a surface crosses the voxel), empty (free space) or hidden (not observed). Then the volume representation is projected onto the frames in order to fill the hole as far as possible. In this way, the hole is reduced in each frame to the pixels which 3D point is observed in no frame. The surface pixels adjacent to the remaining hole are re-projected onto the volumetric representation so that the "side" voxels are identified.

In both variants, a distance threshold is advantageously introduced in order to avoid filling the hole with far surfaces that do not correspond to the continuity of the side surfaces.

##### 3.1.2. Filling the remaining hole:

In the first variant the remaining hole is filled by interpolating the depth maps. More precisely, in the depth maps representation, the filling process relies on the pixels that belong to the hole side. Advantageously the hole side is scanned to detect whether there is a depth discontinuity or not. If there is no discontinuity, the depth map is filled via inpainting techniques or via global optimization techniques with boundary conditions and smoothness constraints on depth and surface normal vectors. If there are discontinuities, the hole side is segmented in various surfaces, and each segmented surface is reconstructed via the inpainting or optimization methods. A final reconstruction assigns a surface to each pixel, by carrying out an optimization technique based on depth criterion and boundary conditions on depth discontinuities. The reconstructed surface in one view is projected on the next view in order to fill the hole at least partially, and the remaining hole is filled via the intra-frame technique.

In the second variant the remaining hole is filled by interpolating in the volumetric domain. More precisely, in the volumetric representation, the reconstruction of the hidden surfaces relies on the voxels of the hole side. Only the 'hidden' voxels are filled. The initialization is carried out via surface extrapolation from the hole sides or from an intra-frame depth-based filling. Then the filling is refined via global optimization with boundary conditions on the surface normal vectors and smoothness constraints and with the constraint that only the 'hidden' voxels can be filled.

*3.2 Reconstructing reflectance and specular parameter values corresponding to the hidden surface*

Reconstructing S16 the hidden area 48 of the plurality of frames further comprises a sub-step S162 of reconstructing the diffuse reflectance, the diffuse shading, the specular reflectance and the specular lighting parameter values corresponding to the hidden area 48, resulting in a reconstructed area 408. In the hidden area 48 reconstruction, each of the $R_d$, $R_s$, $S_d$ and $S_s$ matrices are advantageously reconstructed independently. Considering the captured scene is static, the reflectance parameter values (both diffuse $R_d$ and specular $R_s$) are constant along the sequence for a pixel displaying a same surface 3D point P(x) of the 3D scene. The reflectance parameter values attached to pixels visible in one frame and hidden by the object 42 to remove in another frame is used to fill the hole (inter-view filling). In other words, since the reflectance parameter values are constant for a pixel displaying a same surface 3D point P(x) of the 3D scene, the reflectance parameter values (both diffuse and specular) attached to a pixel visible in one frame and hidden by the object 42 to remove in another frame are used as the reflectance parameter values for the corresponding pixels of the hidden area of the corresponding frames. This filling is carried out by using known 3D camera pose and 3D scene geometry (e.g. depth maps) to match hidden pixels with visible data in other frames.

In this way, in each frame of the sequence, the hole is reduced to pixels that are hidden in all frames. Then the remaining holes are filled as follows : in one frame, the remaining hole is filled via intra-frame interpolation by interpolating the reflectance (both diffuse and specular) parameter values with classical inpainting techniques. The same intra-frame filling method that is applied to 3D scene geometry (e.g. depth maps) is also applied to reflectance maps. Then the filled reflectance data is sequentially propagated to fill the holes in the other frames via inter-frame filling. The processing is repeated until all the holes are filled. Advantageously, post processing based on spatio-temporal filtering is then also performed to ensure seamless and flicker-free reconstruction.

Shading $S_d^p$ and specular lighting $S_s^p$ parameter values are reconstructed in a similar way, but with specific adaptations. As illustrated in figure 4, shading $S_d^p$ parameter values reconstruction results in a reconstructed shading 404 of an object within the hidden area 48. Similarly specular lighting $S_s^p$ parameter values reconstruction results in a reconstructed specular effect 406. Considering the captured scene is static, shading of a given 3D point is constant over the sequence. Therefore inter-frame filling from visible areas is used to fill the holes as done for the reflectance parameters. On the other hand, regarding the points totally occluded in the sequence, intra-frame interpolation is useful as in the case of the reflectance. But unlike the reflectance holes that are filled via classical inpainting, shading parameter is interpolated by taking into account visibility. Actually, visibility vectors (previously defined) are computed in the remaining holes once the geometry hidden by the removed object has been reconstructed. Then, intra-frame filling of the shading parameter is carried out by taking into account similarity between visibility vectors in the visible neighborhood. Apart from this significant difference, inter-frame and intra-frame interpolations alternate as in the reflectance case.

In a variant, diffuse parameter values of diffuse frames are directly reconstructed with the same visibility constraints as described above, and without decomposing the diffuse frames into intrinsic diffuse reflectance and diffuse shading frames. Avoiding the decomposition in two components is advantageous as a separated reconstruction of these two components may generate noise.

Concerning specular lighting parameter $S_s^p$, an important difference is that the specular lighting parameter value may vary for a particular 3D point along the frames of the video depending on the viewpoint direction with respect to light source directions. Therefore, concerning the hidden area pixels which corresponding 3D point is visible in other views, an inter-frame filling processing is applied only from frames of close viewpoints in case the information is available in these frames. For instance the inter-frame filling is applied when relevant between at least two adjacent frames.

Otherwise, intra-frame interpolation from neighboring visible pixels is carried out. Similarly, the lighting parameter values of the hidden area pixels that are not observed in other views are interpolated from neighboring visible pixels (intra-frame interpolation). Advantageously, similarity of visibility vectors and normal vectors between hidden area pixels and visible neighbors guides inter- and intra-frame filling. Advantageously, post processing based on spatio-temporal filtering is performed to homogenize the parameter values between close viewpoints. This filtering can also be guided by these similarity constraints.

### 4. Removing cast shadows and specular reflections due to the object to remove

In the step S18, cast shadows 44 caused by the object 42 to remove, are removed in the plurality of frames. For each pixel located in a neighboring area of the removed object, having a non-null diffuse shading parameter value, wherein the non-null diffuse shading parameter value is caused by the removed object 42, the non-null diffuse shading parameter value of the pixel is updated from the diffuse shading parameter values of the neighboring pixels and the visibility vectors. More precisely cast shadows 44 are detected from the analysis of the plurality of diffuse shading frames $S_d$. Detecting whether cast shadows 44 are due to the object 42 to remove, in a frame, is done as follow: once the object 42 has been removed and the hidden geometry has been reconstructed S160, the visibility vector of pixels located in a neighboring area are updated: for a surface 3D point and for each direction line, it is detected whether the line crosses the object 42 or not. In case a direction line crosses the object 42, its corresponding visibility vector component value is updated, as it means that the object 42 was occluding the light from that direction for that surface 3D point. Then shading components of pixels which visibility has been modified are updated using the neighboring pixels and the visibility vectors. A multilateral filtering is for example used for this purpose. In this weighted linear filtering, a weight takes into account the similarity between visibility vectors of neighboring pixels.

In the step S18, specular reflections 46 caused by the removed object 42, are removed in the plurality of frames. For each pixel located in a neighboring area of the removed object 42, having a non-null specular lighting parameter value, wherein the non-null specular lighting parameter value is caused by the removed object, the specular lighting parameter value of the pixel is updated from the specular lighting parameter values of the neighboring pixels taking into account similarities in visibility, surface normal vectors and reflectance. More precisely specular reflections are detected from the analysis of the plurality of specular lighting frames $S_s$. In the identification of the reflections due to the object of interest, only the direction from which comes the reflection is considered and it is also detected whether this direction line crosses the object of interest or not. This direction line is represented by $\overline{\omega_i}$ defined below by equation (10). Then the specular lighting parameter values of these pixels are updated from the neighboring pixels taking into account similarities above listed.

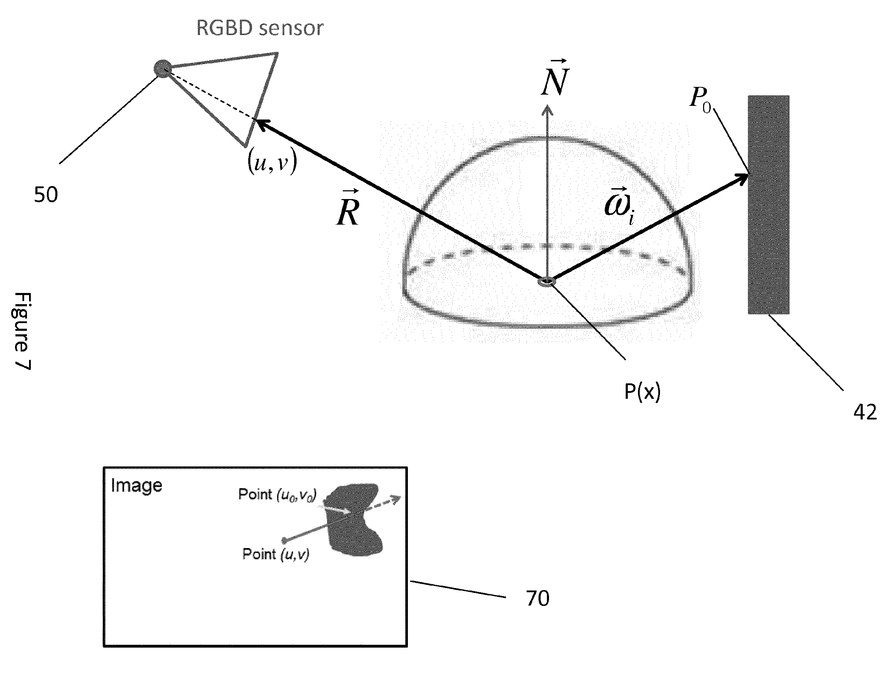

More precisely, the object 42 to remove may create specular effects 46 on other surfaces, e.g. on a table it is put on. This effect is illustrated on figure 7. Let us consider an image sensor 50 observing the scene including the object 42 to remove. Let us consider a (at least partially) specular surface at surface 3D point $P(x)$. This surface 3D point P(x) is observed at an image point $(u,v,t)$ (u and v are the 2D coordinates of the image point in the frame and t refers to this frame). The color of this image point may result from diffuse and specular parts, but the main specular part comes from 3D point $P_0$ as shown in figure 7 that is located on the object 42 to remove. The relation that connects the direction $\overline{\omega_i}$ of the light coming from the object 42 and the direction R of the outgoing light towards the image sensor is given by :

$$\vec{R} = 2\left(\vec{\omega}_i . \vec{N}\right)\vec{N} - \vec{\omega}_i$$

Inversely, we can identify the image points which color has a contribution of the object 42 to remove. Starting from each image point $(u,v,t)$ that does not belong to the hidden area, it is easy to compute successively the coordinates of 3D point $P(x)$ and $\overline{R}$ (from camera intrinsic parameters and poses), the normal vector $\overline{N}$ (it can have been pre-computed on the frame from the depth map) and then the direction $\overline{\omega_i}$ :

$$\vec{\omega}_i = 2\left(\vec{R}.\vec{N}\right)\vec{N} - \vec{R} \qquad (10)$$

Finally, it is possible to test whether the ray defined by $\overline{\omega_i}$ crosses or not the object 42 to remove.

Practically, the test can be limited to the pixels which depth is lower than the minimal distance of the object of interest.

The test can be performed in the 3D scene if a 3D model representation is available. It can also be performed in the frame 70 as illustrated in figure 7 : the 3D half line defined by $\overline{\omega_i}$ is projected on the frame and the half line starting from point *(u,v,t)* is identified as well as its depth equation in the sensor referential. Then, the part of the half line that is superimposed to the object of interest in the frame is scanned searching for a change of sign in relative depth with respect to the object depth. A possible zero crossing identifies the 3D point $P_0$ on the object surface (2D coordinates $(u_0, v_0)$ on frame *t*) which color may be reflected at 3D point *P(x)* and alters color of point *(u,v)*.

This method described for specular reflections can also be applied to the detection of shadows due to the object of interest. In this case, the set of directions is regularly distributed on the hemisphere centered on the surface normal of the 3D point corresponding to the pixel (as explained in the previous sections).

The final pixel color $I^p$ is updated from the corresponding parameter values of the diffuse shading, diffuse reflection, specular reflection and specular lighting pixel, using equation (3).

**Claims**

1. A method for removing an object (42) in a plurality of frames of a video comprising:

   - Obtaining (S11) a hidden area (48) in said plurality of frames wherein said hidden area (48) corresponds to the object (42) to remove;
   - Obtaining (S12) a plurality of diffuse frames from said plurality of frames of a video, comprising diffuse reflectance frames and diffuse shading frames;
   - Obtaining (S14) a plurality of specular frames from said plurality of frames of a video, comprising specular reflectance frames and specular lighting frames;
   - Reconstructing (S16) said hidden area (48) in the plurality of diffuse reflectance, diffuse shading, specular reflectance and specular lighting frames;
   - Removing (S18) cast shadows (44) and specular reflections (46) caused by the object (42) to remove in said plurality of frames.

2. The method according to claim 1, wherein said obtaining (S12) said plurality of diffuse frames from said plurality of frames of a video comprises:

   - determining a diffuse parameter value for a pixel of a frame as the minimum color value of pixels displaying a same registered 3D point of a 3D scene captured by said video;
   - replacing the value of each pixel of each frame of said plurality of frames by the determined diffuse parameter value for that pixel, resulting in said plurality of diffuse frames;
   - decomposing said plurality of diffuse frames into intrinsic frames resulting in diffuse reflectance and diffuse shading frames.

3. The method according to claim 2, wherein said obtaining (S14) said plurality of specular frames from said plurality of frames of a video comprises:

   - subtracting to the value of each pixel of each frame of said plurality of frames, the determined diffuse parameter value for that pixel, resulting in said plurality of specular frames;
   - decomposing said plurality of specular frames into intrinsic frames resulting in specular reflectance and specular lighting frames.

4. The method according to claim 3, wherein said decomposing said plurality of specular frames into intrinsic frames further comprises minimizing an energy function comprising a local specular reflectance constraint, a local specular illumination constraint, a non-local specular reflectance constraint and a non-local specular illumination constraint.

5. The method according to any of claims 2 to 4, wherein said reconstructing (S16) said hidden area (48) further comprises:

   - inter-frame filling of diffuse reflectance, diffuse shading, specular reflectance and specular lighting parameter values between any frames of said plurality, wherein for a 3D point of said 3D scene, the parameter values attached to the pixels of the frames where said 3D point is visible, are used to reconstruct (S162) the parameter values of the pixels of the frames where said 3D point is hidden by the object (42) to remove;
   - intra-frame interpolation of diffuse reflectance, diffuse shading, specular reflectance and specular lighting parameter values in one frame, wherein for a 3D point of said 3D scene, hidden by the object to remove in all the frames, the parameter values of neighboring pixels of said frame are interpolated to reconstruct (S162) the parameter value of a pixel for that 3D point in said frame;
- propagating the interpolated diffuse reflectance, diffuse shading, specular reflectance and specular lighting parameter values of said frame to other frames by said inter-frame filling.

6. The method according to claim 5, wherein said intra-frame interpolation of diffuse and specular reflectance parameter values in said frame comprises inpainting.

7. The method according to any of claims 5 or 6, wherein:

- said reconstructing (S16) said hidden area (48) further comprises reconstructing the geometry of the hidden surface corresponding to said hidden area (48);
- said intra-frame interpolation of said diffuse shading and said specular lighting parameter values is applied between neighboring pixels with similar visibility vectors, wherein the visibility vector of a pixel displaying a registered 3D point comprises a set of components, indicating the visibility of said registered 3D point in a set of directions, sampled around the normal at said registered 3D point.

8. The method according to any of claims 5 to 7, wherein said inter-frame filling of said specular lighting parameter values is applied between at least two adjacent frames.

9. The method according to any of claims 1 to 8, wherein said removing (S18) cast shadows (44) caused by the object (42) to remove further comprises, for each pixel located in a neighboring area of the removed object, having a non-null diffuse shading parameter value:

- determining whether it is caused by the removed object from the visibility vector of said pixel; and
- in case a non-null diffuse shading parameter value is caused by the removed object, updating said visibility vector and the diffuse shading parameter value from the diffuse shading parameter values of the neighboring pixels, by taking into account the similarity between said updated visibility vector and the visibility vectors of said neighboring pixels.

10. The method according to any of claims 1 to 9, wherein said removing (S18) specular reflections (46) caused by the object (42) to remove further comprises, for each pixel located in a neighboring area of the removed object, having a non-null specular lighting parameter value :

- determining whether it is caused by the removed object from the visibility vector of said pixel; and
- in case a non-null specular lighting parameter value is caused by the removed object, updating the specular lighting parameter value from the specular lighting parameter values of the neighboring pixels by taking into account similarities in visibility vectors, surface normal vectors and reflectance parameter values of said neighboring pixels.

11. A device (1) for removing an object (42) in a plurality of frames of a video, said device (1) comprising a processor (210) that is configured to:

- Obtain a hidden area (48) in said plurality of frames wherein said hidden area (48) corresponds to the object (42) to remove;
- Obtain a plurality of diffuse frames from said plurality of frames of a video, comprising diffuse reflectance frames and diffuse shading frames;
- Obtain a plurality of specular frames from said plurality of frames of a video, comprising specular reflectance frames and specular lighting frames;
- Reconstruct said hidden area (48) in the plurality of diffuse reflectance, diffuse shading, specular reflectance and specular lighting frames;
- Remove cast shadows (44) and specular reflections (46) caused by the object (42) to remove in said plurality of frames.

12. The device (1) according to claim 11, wherein the processor (210) is further configured to:

- determine a diffuse parameter value for a pixel of a frame as the minimum color value of pixels displaying a same registered 3D point of a 3D scene captured by said video;
- replace the value of each pixel of each frame of said plurality of frames by the determined diffuse parameter value for that pixel, resulting in said plurality of diffuse frames;
- decompose said plurality of diffuse frames into intrinsic frames resulting in diffuse reflectance and diffuse shading frames.
- subtract to the value of each pixel of each frame of said plurality of frames, the determined diffuse parameter value for that pixel, resulting in said plurality of specular frames;
- decompose said plurality of specular frames into intrinsic frames resulting in specular reflectance and specular lighting frames.

13. The device (1) according to claim 11 or 12, wherein, for each pixel located in a neighboring area of the removed object, having a non-null specular lighting parameter value, the processor (210) is further configured to:

- determine whether it is caused by the removed object from the visibility vector of said pixel; and
- in case a non-null specular lighting parameter value is caused by the removed object, update the specular lighting parameter value from the specular lighting parameter values of the neighboring pixels by taking into account similarities in visibility vectors, surface normal vectors and reflectance parameter values of said neighboring pixels.

14. A computer program for removing an object (42) in a plurality of frames of a video, said computer program comprising program code instructions executable by a processor for:

- Obtaining (S11) a hidden area (48) in said plurality of frames wherein said hidden area (48) corresponds to the object (42) to remove;
- Obtaining (S12) a plurality of diffuse frames from said plurality of frames of a video, comprising diffuse reflectance frames and diffuse shading frames;
- Obtaining (S14) a plurality of specular frames from said plurality of frames of a video, comprising specular reflectance frames and specular lighting frames;
- Reconstructing (S16) said hidden area (48) in the plurality of diffuse reflectance, diffuse shading, specular reflectance and specular lighting frames;
- Removing (S18) cast shadows (44) and specular reflections (46) caused by the object (42) to remove in said plurality of frames.

15. A computer program product for removing an object (42) in a plurality of frames of a video, said computer program product being stored on a non-transitory computer readable medium, and comprising program code instructions executable by a processor for:

- Obtaining (S11) a hidden area (48) in said plurality of frames wherein said hidden area (48) corresponds to the object (42) to remove;
- Obtaining (S12) a plurality of diffuse frames from said plurality of frames of a video, comprising diffuse reflectance frames and diffuse shading frames;
- Obtaining (S14) a plurality of specular frames from said plurality of frames of a video, comprising specular reflectance frames and specular lighting frames;
- Reconstructing (S16) said hidden area (48) in the plurality of diffuse reflectance, diffuse shading, specular reflectance and specular lighting frames;
- Removing (S18) cast shadows (44) and specular reflections (46) caused by the object (42) to remove in said plurality of frames.

Figure 1

Figure 2

Figure 3

Figure 4

Figure 5

Figure 6

Figure 7

**Europäisches Patentamt**
**European Patent Office**
**Office européen des brevets**

# EUROPEAN SEARCH REPORT

Application Number

EP 15 30 6126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2013/089258 A1 (HERLING JAN [DE] ET AL) 11 April 2013 (2013-04-11)<br>* paragraph [0001] *<br>* paragraphs [0047], [0048], [0049], [0054] *<br>* paragraph [0051] *<br>* paragraph [0052] *<br>----- | 1,11,14,15<br>2-10,12,13 | INV.<br>G06T5/00<br>G06T5/50 |
| | | | TECHNICAL FIELDS SEARCHED (IPC)<br><br>G06T |

The present search report has been drawn up for all claims

| Place of search | Date of completion of the search | Examiner |
|---|---|---|
| Munich | 18 January 2016 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6126

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2016

| Patent document cited in search report | Publication date | Patent family member(s) | Publication date |
|---|---|---|---|
| US 2013089258 A1 | 11-04-2013 | NONE | |

For more details about this annex : see Official Journal of the European Patent Office, No. 12/82

EPO FORM P0459

**REFERENCES CITED IN THE DESCRIPTION**

**Non-patent literature cited in the description**

- **LEE et al.** Estimation of intrinsic image sequences from image+depth video. *the Proceedings of the European Conference on Computer Vision,* 2012
- **PHONG.** Illumination for computer generated pictures. *Communications of ACM,* 1975, vol. 18

- **NEWCOMBE et al.** KinectFusion: Real-Time Dense Surface Mapping and Tracking. *the Proceedings of the 10th International Symposium on Mixed and Augmented Reality,* 2011